Europäisches Patentamt

**(19)** European Patent Office

Office européen des brevets

**(11)** Publication number : **0 294 484 B1**

## EUROPEAN PATENT SPECIFICATION

**(45)** Date of publication of patent specification :
**25.03.92 Bulletin 92/13**

**(51)** Int. Cl.$^5$ : **B60C 9/22,** B29D 30/30

**(21)** Application number : **87907145.4**

**(22)** Date of filing : **30.10.87**

**(86)** International application number :
**PCT/JP87/00843**

**(87)** International publication number :
**WO 88/03482 19.05.88 Gazette 88/11**

**(54) METHOD OF MANUFACTURING A PNEUMATIC RADIAL TYRE.**

Divisional application 91200631.9 filed on
30/10/87.

**(30)** Priority : **05.11.86 JP 263058/86**

**(43)** Date of publication of application :
**14.12.88 Bulletin 88/50**

**(45)** Publication of the grant of the patent :
**25.03.92 Bulletin 92/13**

**(84)** Designated Contracting States :
**DE FR GB LU**

**(56)** References cited :
**FR-A- 1 538 618**
**FR-A- 1 586 370**
**FR-A- 2 369 925**

**(56)** References cited :
**FR-A- 2 409 871**
**FR-A- 2 421 073**
**FR-A- 2 501 126**
**JP-A- 5 839 438**
**JP-A-57 201 701**

**(73)** Proprietor : **SUMITOMO RUBBER INDUSTRIES LIMITED**
**No. 1-1, Tsutsui-cho 1-chome**
**Chuo-ku Kobe-shi Hyogo 651 (JP)**

**(72)** Inventor : **ODA, Kazuo**
**Nigawadai**
**39, Takarazuka-shi Hyogo 665 (JP)**

**(74)** Representative : **Stewart, Charles Geoffrey**
**SP TYRES UK LIMITED Tyre Technical Division**
**Fort Dunlop Birmingham B24 9QT (GB)**

EP 0 294 484 B1

## Description

The present invention relates to a method of manufacturing a pneumatic radial tyre.

A radial tyre for aircraft or for heavy duty use has at least one layer of belt so as to maintain the required tread surface shape under the severe conditions of high internal pressure and heavy load, and to endure impacts from the road surface. Each belt layer has a cord angle of 0 to 90 degrees with regard to the circumferential centre line of the tyre, and is formed by winding belt-shaped material cut at the required width, around a cylindrical belt drum or by winding it directly around a carcass held shaped by an appropriate internal pressure.

In some cases, a belt layer having a wide section width is required in the tyre. In such cases, if the shoulder portions of the belt layers are located close to the carcass line in the shaping and vulcanizing processes of a green tyre, the inner diameter of the belt in the shoulder portions becomes less than the inner diameter at the centre portion.

When a tyre having such a belt structure is inflated, if the belt plies are each composed of one-piece structures, an uneven tension is applied to the belt plies. That is, the tension at the tread shoulder portions is less than the tension at the tread centre portion because of the difference in the above-mentioned inner diameters.

This may become a cause of serious structural failure especially in radial tyres for an aircraft which lands and takes off at high speed. For example pneumatic radial tyres attached to an aircraft taking off at a speed of 370 km/h reach that speed in a short time under heavy load. At this moment, in the shoulder portions where the belt tension is relatively small, a phenomenon in which the belt edges are deformed outwardly in the radial direction of the tyre, so-called lifting, occurs due to the centrifugal force on the tread. This induces increased distortion and causes separation of tyre components.

A method employed to prevent such trouble, described in GB-A-1148120, is to construct the full width of the belt ply by the so-called cordwinding method so as to unify the tension applied on the belt cord in high-speed running, but this method is poor in production efficiency. Another method, described in JP-B-4417801, is to design a profile having a constant belt diameter, but in tyres used at high internal pressure such as aircraft tyres, the increase of diameter on inflation is so large at the tread centre that the tension applied on the tread centre is forced to be large.

It is ehnce a primary object of the present invention to provide a method of manufacturing a pneumatic radial tyre which unifies the tension applied on the belt cord on inflation without reducing the efficiency of production, decreases lifting at the belt edges at high speed, and therefore enhances the structural durability of the pneumatic radial tyre at high speed.

Accordingly the present invention provides a method of making the radial tyre as claimed in claim 1, comprising the steps of making the tyre using a belt drum having a cylindrical centre part and on both sides thereof tapered parts parts for which the outer diameter gradually decreases, forming a ring-shaped centre belt by winding belt material around said centre part, forming ring-shaped shoulder belts by winding belt material around said tapered parts of the belt drum to form a belt in which the inner diameter gradually reduce space in the shoulder portions, forming a tread/belt laminate body by winding a tread on the circumference of the belt in the belt shape, and forming a green tyre by winding tread/belt laminate body wound a carcass shaped in a toroidal shape, which carcass is composed of at least one ply of cases arranged in the radial direction.

In order to prevent the lifting of the belt edges which causes separation initiating at the belt edges, it is effective to increase the tension of the belt layer in the shoulder portions.

FR-A-2421073 shows a tyre according to the preamble of claim 1 in which the belt plies are divided into three protions, a centre portion and two shoulder portions, and the cords of the shoulder belt portions are arranged substantially parallel to the central circumferential line of the tyre. The circumferential length of each portion of cord in each shoulder belt region can be set at a length suitable for the inner diameter at each portion, whereby the tension applied to the belt layer in use can be uniform. The occurrence of lifting is thus prevented and the structural durability is hence enhanced.

Further aspects of the invention will be apparent from the brief description with the drawings in which:-

Fig. 1 shows a sectional shape of a tyre manufactured according to the present invention.

Figs. 2 to 5 are sectional views each showing the structure of the shoulder portion of a belt layer.

Figs. 6 and 7 are drawings explaining a method of forming a belt of this invention.

Fig. 8 shows a belt drum.

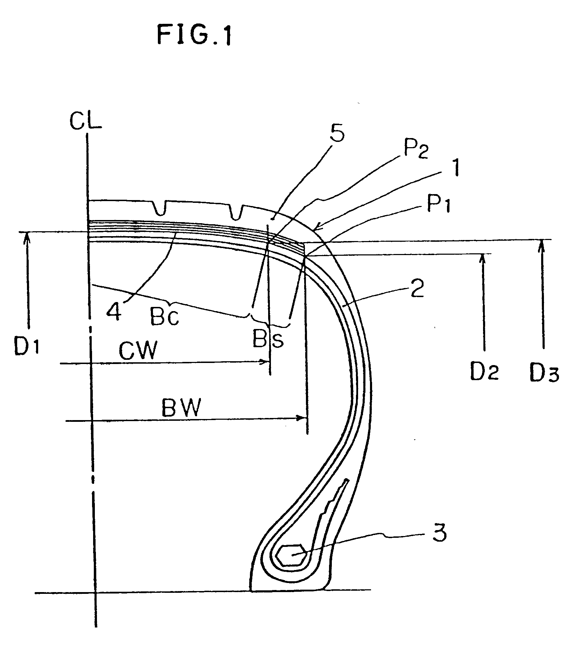

Referring to the drawings, Fig. 1 shows a tyre, which comprises a carcass 2 composed of cords turned up around bead cores 3 from the inside to the outside of the tyre and arranged substantially in the radial direction, a belt layer 4 located outside the carcass 2 and a tread 5.

In the belt layer 4, the inner diameter D1 at the tread centre CL is greater than the inner diameter D2 at the edge P1 of the belt layer. If each belt ply forming the layer is composed of a one-piece structure as in conventional tyre, the tension applied on the belt layer becomes uneven owing to the difference between the above-mentioned D1 and D2, but in the tyre according to the present invention, the tension applied on the belt layer does not become uneven even though the difference in inner diameters D1 and D2 exists.

This is because in this invention, the belt ply is divided into three parts BC and BS near a point P2 where the curvature of the belt ply changes greatly. The inner diameters of the breaker at those positions satisfy the following relation,

$$D1-D3 < D3-D2$$

where D3 indicates the inner diameter of the belt layer 4 at the point P2.

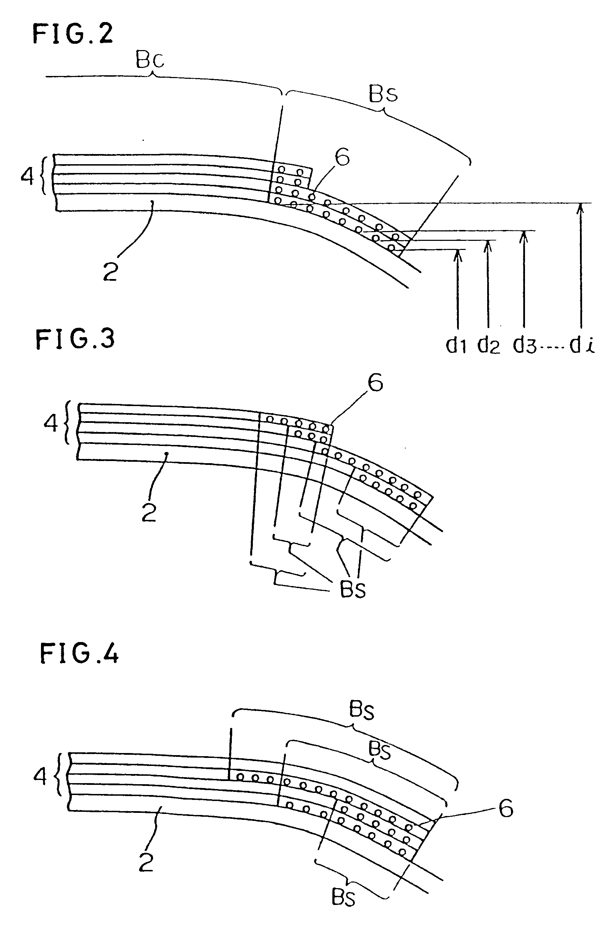

The or each cord forming the edge region BS is substantially parallel to the central circumferential line of the tyre. Fig. 2 shows the shoulder portion of the belt layer 4 in detail. The or each cord 6 constructiong the region BS, substantially parallel to the central circumferential line of the tyre, has a circumferential lengths in each respective portion suitable for the inner diameter di at each said portions.

By constructing in this way, the tension of the belt layer in the shoulder portions in use can be increased, and lifting can thus be prevented.

For the maximum width BW of the belt layer, an appropriate value is chosen depending on the carcass profile of the tyre. When plural belt plies having a three-division structure exist, if the borders of portion BC and the portion BS of the belt plies coincide with each other, the stiffness of the belt layer 4 is seen to change drastically, and a bad influence may therefore be made to its durability and mobility. In such cases, it is possible to shift the boundaries of the portion BC and portions BS of successive belt plies as shown in Fig. 3 and Fig. 4.

Conventionally, a belt layer of a pneumatic radial tyre was formed by winding belt-shaped materials, which are cut to the necessary width, around a cylindrical belt drum or winding such materials on a carcass which is shaped by being filled with pressurised air.

The pneumatic radial tyre of this invention cannot be produced in such a conventional tyre forming method.

Accordingly a belt layer in which the inner diameter gradually decreases at its shoulder portions is formed by producing a belt drum having tapered side parts the diameter of which is gradually reduced on both sides of the cylindrical centre part, forming a centre belt region by winding a rubber coated cord fabric which is at an angle of 0 to 90 degrees with repect to the central circumferential line of the tyre around the above-mentioned centre part, and then forming each shoulder belt by continuously winding at least one rubber coated cord around the above-mentioned tapered parts while gradually moving its position. This method enables one to produce the pneumatic radial tyre of this invention.

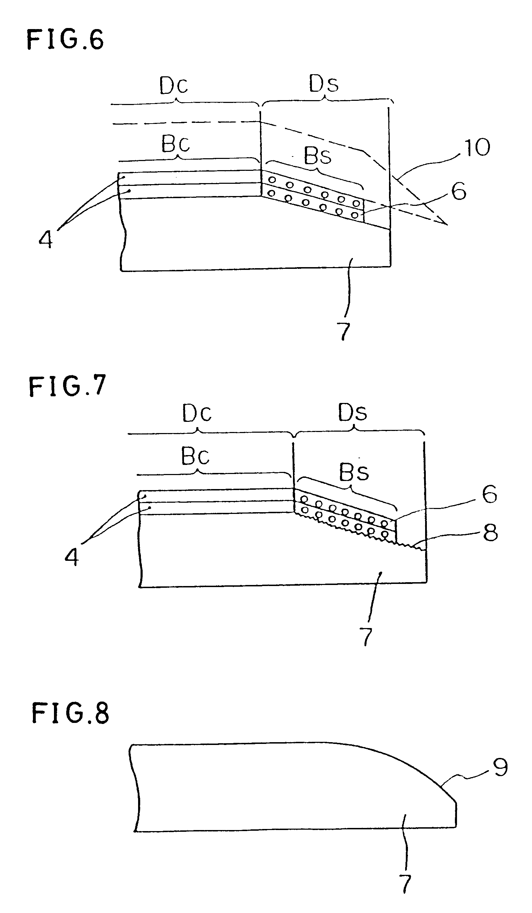

After forming the belt layer, a green tyre is formed according to the conventional method. That is by winding a belt-shaped tread onto the outer circumference of the belt layer located on the belt drum to form a tread/belt laminate assembly, taking the tread/laminate assembly off the belt drum by reducing its diameter, transferring it to a shaping drum for a green tyre, and assembling it on to a carcass on a shaping drum which is shaped into a torroidal shape. Fig. 6 is a sectional view of a shoulder being formed, a belt drum 7 comprises a centre portion DC and tapered portions DS one at each side of the centre portion. The drum can thus form the centre belt BC of the belt layer 4 on DC, and shoulder belts BS by winding the cord 6 continuously in each belt ply around DS. The width and the angle of inclination of DS can be arbitrarily selected depending on the necessary length of BS and di for the tyre as shown in Fig. 2. Numeral 10 in Fig. 6 denotes the tread then wound on the belt layer.

In such a case, it is sometimes difficult to form the shoulder belt because the cord slips on the tapered portion. Fig. 7 shows a belt drum having a tapered portion equipped with roughness 8 to prevent such slipping.

The object can be achieved also by a belt drum having a tapered portion with an arc-shaped surface 9 as shown in Fig. 8.

The shoulder belt, meanwhile, can be formed by winding a cord for the shoulder belt in a few stages in the normal direction with regard to the drum axis instead of winding it continuously along the tapered portion of the belt drum.

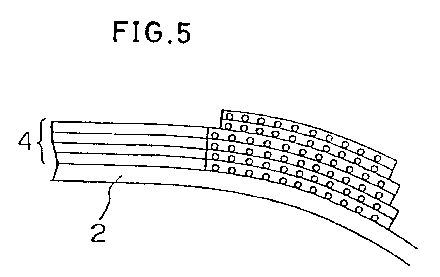

Figs. 2 to 5 show embodiments of the belts according to the present invention.

The belt layer 4 is arranged over the carcass 2 and has shoulder belt regions BS. The or each cord 6 in each shoulder belt BS is substantially parallel to the central circumferential line of the tyre. Furthermore, the cords of each centre belt BC form an angle of 0 to 90 degrees to the central circumferential line of the tyre.

As material for the cord for the carcass and belt, nylon, rayon, polyester or aromatic polyamide fibres, or non-stretchable fibres such as metallic fibres can be employed. The number of plies thereof can be arbitrarily selected depending on the conditions of use, and the materials chosen.

Fig. 3 shows an example of the belt layer in which the borders between BS and BC in the several belt plies are shifted or staggered from another. Fig. 4 shows another example combined with a belt ply having in the top ply and Fig, 5 shows still another example adding belt plies composed of only shoulder belts. The hoop effect can be further enhanced by this additional layer.

The present invention causes a decrease in lifting at the belt edge of the tyre when running at high speed and greatly enhances the structural durability at high speed as required in such a pneumatic radial tyre. The tyre structure and its manufacturing method of this invention can be applied for a pneumatic radial tyre which is used at high speed and in which a high structural durability is required, especially a radial tyre for aircraft.

## Claims

1. A method of manufacturing a pneumatic radial tyre comprising a carass shaped in a toroidal shape, which carcass is composed of at least one ply of cords arranged in the radial direction said shaping method comprising the steps of: forming a ring-shaped centre belt (BC) by winding belt material around the centre part (DC), forming ring shaped shoulder belts (BS) by winding belt material (6) around the shoulder parts (DS) to form a belt in which the inner diameter is gradually reduced towards the shoulder portions, characterised by using a belt drum (7) having a cylindrical centre part (DC) and tapered parts (DS) of which the outer diameter gradually decreases towards the outer sides, forming a tread/belt laminate assembly by winding a tread on the circumference of the belt in a belt shape and forming a green tyre by winding the tread/belt laminate body around said carcass.

2. A method of manufacturing a pneumatic radial tyre as set forth in claim 1, characterised in that at least one continuous cord (6) coated with rubber is continuously wound around each tapered part (DS) on both sides of said belt drum (7) while gradually moving the winding position.

3. A method of manufacturing a pneumatic radial tyre as set forth in claim 2, characterised in that the said continuous cord (6) is wound onto tapered parts (DS) of said belt drum (7) each provided with a slip preventing rough surface (8).

## Patentansprüche

1. Verfahren zur Herstellung eines Radial-Luftreifens, der eine in Toroidform geformte Karkasse umfaßt, die aus mindestens einer Lage von in radialer Richtung angeordneten Korden besteht, wobei das Formungsverfahren die Schritte umfaßt: es wird ein ringförmiger Zentralgürtel (BC) ausgebildet durch Wickeln von Gürtelmaterial um den Zentralteil (DC), es werden ringförmige Schultergürtel (BS) gebildet durch Wickeln von Gürtelmaterial (6) um die Schulterteile (DS) zur Bildung eines Gürtels, dessen Innendurchmesser zu den Schulterabschnitten hin allmählich reduziert wird, dadurch gekennzeichnet, daß eine Gürteltrommel (7) mit einem zylindrischen Zentralteil (DC) und sich verjüngenden Teilen (DS), deren Außendurchmesser allmählich zu den Außenseiten hin abnehmen, daß eine Laufstreifen/Gürtel-Laminatanordnung ausgebildet wird durch Wickeln eines Laufstreifens um den Umfang des Gürtels in einer Gürtelform zur Ausbildung eines Rohreifens durch Wickeln des Laufstreifen/Gürtel-Laminatkörpers um die Karkasse.

2. Verfahren zur Herstellung eines Radial-Luftreifens nach Anspruch 1, dadurch gekennzeichnet, daß mindestens ein kontinuierlicher mit Gummi beschichteter Kord (6) fortlaufend um jeden sich verjüngenden Teil (DS) an beiden Seiten der Gürteltrommel (7) gewickelt ist unter allmählicher Bewegung der Wickelstelle.

3. Verfahren zur Herstellung eines Radial-Luftreifens nach Anspruch 2, dadurch gekennzeichnet, daß der kontinuierliche Kord (6) auf die sich verjüngenden Teile (DS) der Gürteltrommel (7) gewickelt wird, die jeweils mit einer ein Abgleiten verhindernden rauhen Oberfläche (8) versehen sind.

## Revendications

1. Procédé de fabrication d'un pneumatique à carcasse radiale, comprenant une carcasse mise sous forme toroïdale, cette carcasse étant composée d'au moins une nappe de câblés disposés dans la direction radiale, le procédé de mise en forme comprenant des étapes de formation d'une ceinture centrale (BC) de forme annulaire par enroulement du matériau de ceinture autour de la partie centrale (DC), de formation de ceinture d'épaulement (BS) de forme annulaire par enroulement du matériau de ceinture (6) autour des parties d'épaulement (DS) pour la formation d'une ceinture dans laquelle le diamètre interne est réduit progressivement vers les parties d'épaulement, caractérisé par l'utilisation d'un tambour (7) de ceinture ayant une partie cylindrique centrale (DC) et des parties inclinées (DS) dont le diamètre externe diminue progressivement vers les côtés externes, par la formation d'un ensemble stratifié bande de roulement-ceinture par enroulement d'une bande de roulement à la circonférence de la ceinture sous forme d'une ceinture, et la formation d'un pneumatique non vulcanisé par enroulement du corps stratifié bande de roulement-ceinture autour de la carcasse.

2. Procédé de fabrication d'un pneumatique à carcasse radiale selon la revendication 1, caractérisé en ce qu'un câblé continu au moins (6) revêtu de caoutchouc est enroulé de façon continue autour de chaque partie inclinée (DS) des deux côtés du tambour (7) de ceinture, avec déplacement progressif de la position d'enroulement.

3. Procédé de fabrication d'un pneumatique à carcasse radiale selon la revendication 2, caractérisé en ce que le câblé continu (6) est enroulé sur les parties inclinées (DS) du tambour (7) de ceinture qui ont chacune une surface rugueuse (8) destinée à empêcher le glissement.

FIG.1

**FIG.2**

**FIG.3**

**FIG.4**

# FIG.5

FIG.6

Dc

Ds

Bc

Bs

10

6

4

7

FIG.7

Dc

Ds

Bc

Bs

6

8

4

7

FIG.8

9

7